# EUROPÄISCHE PATENTSCHRIFT

(11) **EP 4 699 782 B1**
(45) Veröffentlichungstag und Bekanntmachung des Hinweises auf die Patenterteilung: **07.10.2026**
(21) Anmeldenummer: 25168548.3
(22) Anmeldetag: 04.04.2025
(51) Int. Cl.: B29C 49/48, B65D 83/62, B65B 11/02, B29L 9/00, B65D 1/09

(54) **VERFAHREN ZUR HERSTELLUNG EINER KARTUSCHE**
METHOD FOR MANUFACTURING A CARTRIDGE
PROCÉDÉ DE FABRICATION D'UNE CARTOUCHE

(30) Priorität: 20.08.2024 DE 102024123717
(43) Veröffentlichungstag der Anmeldung: 25.02.2026
(73) Patentinhaber: Gaplast GmbH, 82442 Altenau (DE)
(72) Erfinder: Kneer, Stephan, 82490 Farchant (DE); Yilginc, Kasim, 82487 Oberammergau (DE)
(74) Vertreter: Flosdorff, Jürgen

(56) Entgegenhaltungen:
- EP-B1- 0 532 873
- EP-B1- 1 268 160
- US-A1- 2007 040 306
- US-A1- 2014 034 658
- US-A1- 2023 173 736

## Beschreibung

Die Erfindung betrifft ein Verfahren zur Herstellung einer Kartusche, die aus einem steifen Außenbehälter und einem verformbaren Innenbeutel besteht. Bei diesem Verfahren führen ein erster Schneckenförderer einen ersten thermoplastischen Kunststoff für den Außenbehälter und ein zweiter Schneckenförderer einen zweiten thermoplastischen Kunststoff für den Innenbeutel einem Extruder zu, der einen Vorformling koextrudiert, der zwischen geöffneten Hälften einer Blasform einer Blasanlage angeordnet wird. Die beiden Kunststoffe gehen keine Schweißverbindung miteinander ein. Die Blasform wird geschlossen, wenn der Vorformling die zur Herstellung der Kartusche erforderliche Länge hat, wobei im Bodenbereich der herzustellenden Kartusche einen Quetschnaht entsteht. Diese Quetschnaht besteht außen aus dem Material des Außenbehälters, in der die verschweißte Bodennaht des Innenbeutels eingeklemmt ist. Der Vorformling wird danach durch ein Druckmedium zur Anlage an die Wandung der Blasform aufgeblasen, woraufhin die Kartusche aus der Blasform entnommen wird.

Ein derartiges Verfahren ist bekannt und wird in vielfältigen Variationen praktiziert, wobei es bisher immer darum geht, den Innenbeutel vor der Befüllung mit dem abzugebenden flüssigen oder pastösen Füllmaterial von der Wand des Außenbehälters abzulösen und danach wieder an den Außenbehälter anzulegen. Dieses Ablösen des zunächst durch Adhäsion an der Innenwand des Außenbehälters haftenden Innenbeutels ist erforderlich, damit sich der Innenbeutel bei der Abgabe des Behälterinhalts zusammenziehen kann. Bei den bisher anzutreffenden Verfahren dieser Art wird der Innenbeutel vollständig von der Innenwand des Außenbehälters abgelöst bzw. delaminiert, damit der gesamte Inhalt ausgebracht werden kann.

Der vorliegenden Erfindung liegt die Aufgabe zugrunde, ein Verfahren zur Herstellung einer Kartusche anzugeben, die für den Einsatz in einem Zerstäuber geeignet ist. Bei dieser Verwendung enthält die Kartusche ein zu zerstäubendes Fluid, das eine pharmazeutische Zusammensetzung hat und/oder ein flüssiges Medikament ist. Bei der Verwendung in einem Zerstäuber wird aus der Kartusche eine vorgegebene Anzahl von Sprühstößen abgegeben, wobei die Kartusche im Gegensatz zu den bekannten Anwendungsmöglichkeiten nicht vollständig entleert werden soll.

Diese Aufgabe, eine Kartusche herzustellen, die zur Verwendung in einem Zerstäuber der oben genannten Art geeignet ist, wird erfindungsgemäß durch die im Patentanspruch 1 gekennzeichneten Schritte gelöst.

Vorteilhafte Weiterbildungen des Verfahrens sind in den Unteransprüchen gekennzeichnet.

Die Erfindung sieht vor, dass nach Entnahme der Kartusche aus der Blasform und deren Abkühlen vorzugsweise auf Raumtemperatur die Quetschnaht bis auf eine verbliebene Breite von 0,6 bis 0,15, vorzugsweise 0,2 mm abgeschnitten wird. Die Quetschnaht wird dabei in einer Schneideanlage mit einem ebenen und gleichmäßigen Schnitt so abgeschnitten, dass vorzugsweise ca. 0,2 mm der Quetschnaht übrig bleiben. Dies gewährleistet, dass noch ein ausreichender Überquetschungsbereich des Innenbeutels verbleibt, um dessen Dichtigkeit am Boden zu gewährleisten.

Die Kartusche wird anschließend seitlich zusammengedrückt und dabei um ihre Längsachse gedreht, bis die Quetschnaht sich öffnet bzw. aufspringt, wobei die verschweißte Bodennaht des Innenbeutels an einer Seite der aufgesprungenen Quetschnaht haften bleibt, das heißt die verschweißte Bodennaht des Innenbeutels bleibt auf einer Quetschnahthälfte kleben. Gleichzeitig wird der Bodenbereich des Innenbeutels an der anderen Seite von der Innenwand des Außenbehälters ein wenig vor-delaminiert, das heißt ein wenig abgelöst, während der Innenbeutel an der Seite, an der die verschweißte Bodennaht in der aufgesprungenen Quetschnaht haften bleibt, weiterhin durch Adhäsion an der Innenwand des Außenbehälters kleben bleibt. Hierdurch ist gewährleistet, dass der Innenbeutel bei der Anwendung der Kartusche mit zunehmender Abgabe vom Behälterinhalt nicht nach oben gestülpt wird, da der Innenbeutel auf einer Quetschnahthälfte fixiert ist. Dieses Ablösen der einen Hälfte des Innenbeutels erfolgt in einer bevorzugten Ausführungsform des Verfahrens dadurch, dass die Kartusche aufrecht auf einem umlaufenden horizontalen Förderband stehend zwischen einem vertikalen umlaufenden Band um einem feststehenden Band abläuft, wobei eine der beiden Bänder im unteren Bereich der Kartusche eine vorspringende Kontur hat, deren Abstand von dem gegenüber angeordneten Band etwas kleiner als der Außendurchmesser der Kartusche ist, wobei die Kartusche um ihre vertikale Achse gedreht wird und im unteren Bereich derart zusammengedrückt wird, dass die Quetschnaht aufspringt.

Durch die offene Quetschnaht erfolgt der Druckausgleich zwischen Innenbeutel und Außenbehälter bei Abgabe von Behälterinhalt.

Da die Kartusche über eine bestimmte Weglänge gedreht wird, vorzugsweise mindestens um eine volle Umdrehung, geschieht die Vor-delaminierung nicht schlagartig, was den Innenbeutel zum Reißen bringen könnte, sondern Schrittweise. Die Kartusche läuft bei der Drehung entlang einer vorspringenden Kontur, die vorzugsweise an dem feststehenden Band ausgebildet ist, ab, wobei diese Kontur über die Squeeze-Strecke sich in der Höhe und dem vorspringenden Maß ändern kann. Während der Drehung der Kartusche löst sich der Innenbeutel an einer Seite der aufgesprungenen Quetschnaht zunehmend ab. Am Ende dieses Prozesses ist eine Hälfte des Innenbeutels zumindest im Bodenbereich vor-delaminiert.

Anschließend wird die Kartusche vorzugsweise an eine Kollabierstation übergeben, an der ein Dorn in die Kartusche eintaucht und ein Zylinder die eingeschlossene Luft in der Kartusche evakuiert, sodass ein Unterdruck entsteht, der in der Kartusche gemessen werden kann. Ab einem bestimmten Unterdruckwert löst sich die vor-delaminierte Hälfte des Innenbeutels vollständig von der zugehörigen Innenwand des Außenbehälters.

Anschließend wird durch ein Umschaltventil Überdruck in der Kartusche erzeugt, damit sich der Innenbeutel wieder vollständig an die Innenwand des Außenbehälters anlegt. Danach ist die Kartusche zum Einsatz in einem Zerstäuber bereit.

Das Ablösen der vor-delaminierten Innenbeutelhälfte erfolgt mit einem geringen Unterdruck, sodass die verschweißte Bodennaht des Innenbeutels in der aufgesprungenen Quetschnaht haften bleibt.

Beim Gebrauch der Kartusche in einem Zerstäuber wird nicht der gesamte Inhalt der Kartusche ausgebracht, sondern nach einer vorgegebenen Anzahl von Sprühstößen verbleibt eine Restmenge in der Kartusche, die verworfen wird.

Mit großen Vorteil ist bei dem erfindungsgemäßen Verfahren vorgesehen, dass die Kartusche in einer solchen Form aufgeblasen wird, dass der Bodenbereich der zylindrischen Kartusche gerundet ist, indem er an zwei gegenüberliegenden Seiten bogenförmig - und symmetrisch - auf die Quetschnaht zuläuft. Die Höhe des gerundeten Bodenbereichs der Kartusche beträgt vorzugweise 5 % bis 10 % von deren Gesamthöhe.

In weiteren Einzelheiten ist mit Vorteil vorgesehen, dass die Kartusche im unteren Drittel ihrer Höhe zusammengedrückt wird. Das umlaufende Band sollte mit derselben Geschwindigkeit ablaufen wie das horizontale Förderband, und es ist mit Vorteil vorgesehen, dass diese beiden Bänder aus Stoff oder Gummi bestehen. Das feststehende vertikale Band besteht hingegen zweckmäßiger Weise aus einer Aluminiumlegierung oder aus Stahl.

Die beiden Bänder laufen mit einer solchen Geschwindigkeit, dass sich die Kartusche an dem vertikalen Band wenigstens einmal um 360° dreht, wobei auch mehrere Drehungen um 360° zweckmäßig sein können.

Wie bereits eingangs erwähnt, ist die Kartusche bestens dazu geeignet, in einen Zerstäuber eingesetzt zu werden, wobei sie vorzugsweise mit einer pharmazeutischen Zusammensetzung und/oder einem flüssigen Medikament gefüllt wird.

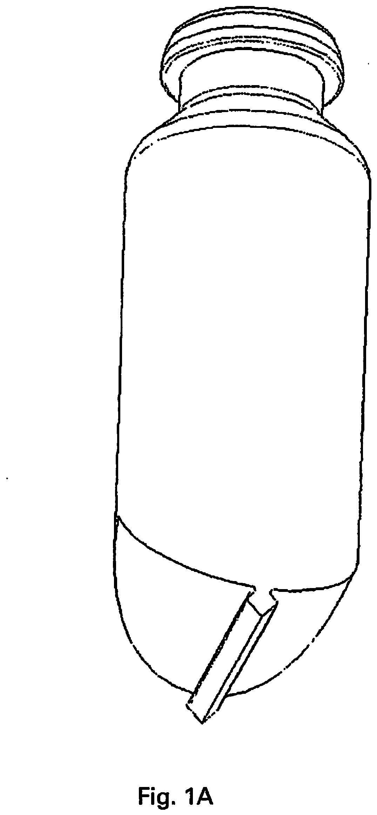

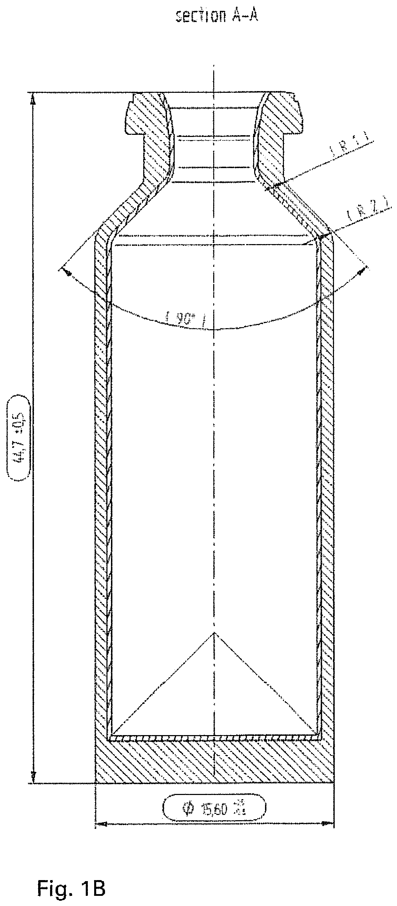

Weitere Einzelheiten der Erfindung ergeben sich aus der nachfolgenden Beschreibung sowie anhand der Zeichnungen. Dabei zeigen: Figur 1A eine perspektivische Ansicht einer bevorzugten Ausführungsform der Kartusche und Figur 1B einen Vertikalschnitt durch die Quetschkante der Kartusche.

Die Kartusche hat eine kreiszylindrische Form mit einem gerundeten Bodenbereich, in dem sie an zwei gegenüber liegenden Seiten bogenförmig auf die Quetschnaht zuläuft. Die Kartusche besteht aus einer stabilen Außenschicht, vorzugsweise aus PP und einer sehr adhäsiven flexiblen Innenschicht, die vorzugsweise aus LDPE besteht. Durch den gerundeten Bodenbereich lässt sich der Innenbeutel schonend von dem Außenbehälter ablösen, sodass der Innenbeutel im unteren negativen Millibar-Bereich kollabieren, das heißt zusammenziehen kann, ohne dass sich der Innenbeutel von der Quetschnaht löst und sich beim Ablösen von unten nach oben wölben kann.

In einer bevorzugten Ausführungsform weist die Kartusche folgende Daten auf.
- Flasche Gesamthöhe (inklusive nicht abgetrennter Quetschnaht): 44,7 +/-0,5 mm
- Flasche Höhe (mit abgetrennter Quetschnaht): ca. 43,10 mm
- Quetschnaht Höhe: ca. 2 mm und nach dem Schnitt ca. 0,4 +/-0,2 mm
- Durchmesser der Kartusche: 15,6 +/- 0,15 mm
- Füllvolumen der Kartusche: 5,07 +/- 0,2 ml
- Gewicht der Kartusche: 1,80 +/- 0,1 gr.
- Material Außenschicht: PP
- Produktberührende Schicht: LDPE
- Kollabierbereich mit befülltem Medium : -26 mbar +/- 8 mbar

## Patentansprüche

1. Verfahren zur Herstellung einer Kartusche bestehend aus einem steifen Außenbehälter und einem verformbaren Innenbeutel, wobei ein erster Schneckenförderer einen ersten thermoplastischen Kunststoff für den Außenbehälter und ein zweiter Schneckenförderer einen zweiten thermoplastischen Kunststoff für den Innenbeutel einem Extruder zuführen, der einen Vorformling koextrudiert, der zwischen den geöffneten Hälften einer Blasform einer Blasanlage angeordnet wird, wobei die Blasform geschlossen wird, wenn der Vorformling die zur Herstellung der Kartusche erforderliche Länge hat, wobei im Bodenbereich der herzustellenden Kartusche eine Quetschnaht aus Material des Außenbehälters, in der die verschweißte Bodennaht des Innenbeutels eingeklemmt ist, ausgebildet wird, und wobei der Vorformling durch ein Druckmedium zur Anlage an die Wandung der Blasform aufgeblasen und die Kartusche aus der Blasform entnommen wird,
**gekennzeichnet durch** folgende Schritte:
a) die Quetschnaht wird bis auf eine Restbreite von 0,6 bis 0,15 mm, vorzugsweise 0,2 mm abgeschnitten,
b) die Kartusche wird seitlich zusammengedrückt und dabei um ihre Längsachse gedreht, bis die Quetschnaht aufspringt, wobei die verschweißte Bodennaht des Innenbeutels an einer Seite der aufgesprungenen Quetschnaht haften bleibt, und der Bodenbereich des Innenbeutels an der anderen Seite der Innenwand des Außenbehälters ein wenig vor-delaminiert wird,
c) in dem Innenbeutel wird ein Unterdruck erzeugt, sodass der Innenbeutel an der vor-delaminierten Seite kollabiert,
d) anschließend wird **durch** Überdruck der Innenbeutel wieder vollständig an die Innenwand des Außenbehälters angelegt.

2. Verfahren nach Anspruch 1,
**dadurch gekennzeichnet,**
**dass** die Kartusche in solcher Form aufgeblasen wird, dass der Bodenbereich der zylindrischen Kartusche gerundet ist, indem er an zwei gegenüber liegenden Seiten bogenförmig auf die Quetschnaht zuläuft.

3. Verfahren nach Anspruch 2,
**dadurch gekennzeichnet,**
**dass** die Höhe des gerundeten Bodenbereichs der Kartusche 5 % bis 10 % der gesamten Höhe beträgt.

4. Verfahren nach einem der Ansprüche 1 bis 3,
**dadurch gekennzeichnet,**
**dass** im Schritt b) die Kartusche aufrecht auf einem umlaufenden horizontalen Förderband stehend zwischen einem vertikalen umlaufenden Band und einem feststehenden Band abläuft, wobei eine der beiden Bänder im unteren Bereich eine vorspringende Kontur hat, deren Abstand von dem gegenüber angeordneten Band etwas kleiner als der Außendurchmesser der Kartusche ist,
**dass** sich die Kartusche beim Durchlauf zwischen den Bändern um ihre vertikale Achse dreht
und **dass** die Kartusche im unteren Bereich derart zusammengedrückt wird, dass die Quetschnaht aufspringt.

5. Verfahren nach Anspruch 4,
**dadurch gekennzeichnet,**
**dass** das feststehende Band die vorspringende Kontur aufweist.

6. Verfahren nach einem der Ansprüche 1 bis 5,
**dadurch gekennzeichnet,**
**dass** die Kartusche im unteren Drittel ihrer Höhe zusammengedrückt wird.

7. Verfahren nach Anspruch 4,
**dadurch gekennzeichnet,**
**dass** das umlaufende Band mit derselben Geschwindigkeit abläuft wie das horizontale Förderband.

8. Verfahren nach einem der Ansprüche 4 bis 7,
**dadurch gekennzeichnet,**
**dass** das vertikale umlaufende Band und das horizontale Förderband aus Stoff oder aus Gummi bestehen.

9. Verfahren nach einem der Ansprüche 4 bis 8,
**dadurch gekennzeichnet,**
**dass** das feststehende vertikale Band aus einer Aluminiumlegierung oder aus Stahl besteht.

10. Verfahren nach einem der Ansprüche 4 bis 9
**dadurch gekennzeichnet,**
**dass** die Bänder mit einer solchen Geschwindigkeit laufen, dass sich die Kartusche an dem vertikalen Band wenigstens einmal um 360° dreht.

11. Verfahren nach einem der Ansprüche 1 bis 10
**dadurch gekennzeichnet,**
**dass** die Kartusche in einen Zerstäuber eingesetzt ist.

## Claims

1. Method for producing a cartridge consisting of a rigid outer container and a deformable inner bag, a first screw conveyor feeding a first thermoplastic material for the outer container and a second screw conveyor feeding a second thermoplastic material for the inner bag to an extruder which co-extrudes a preform which is arranged between the open halves of a blow mould of a blow moulding machine, the blow mould being closed when the preform has reached the length required to produce the cartridge, a mash seam made of material of the outer container being formed in the bottom region of the cartridge to be produced, in which mash seam the welded bottom seam of the inner bag is clamped, and the preform being inflated by a pressure medium in order to abut the wall of the blow mould and the cartridge being removed from the blow mould,
**characterised by** the following steps:
a) the mash seam is cut to a residual width of 0.6 to 0.15 mm, preferably 0.2 mm,
b) the cartridge is compressed laterally and rotated about its longitudinal axis until the mash seam bursts open, the welded bottom seam of the inner bag remaining adhered to one side of the burst open mash seam, and the bottom region of the inner bag is slightly pre-delaminated from the other side of the inner wall of the outer container,
c) a vacuum is generated in the inner bag so that the inner bag collapses on the pre-delaminated side,
d) the inner bag is subsequently made to fully abut the inner wall of the outer container again by means of overpressure.

2. Method according to claim 1,
**characterised in that**,
the cartridge is inflated in such a shape that the bottom region of the cylindrical cartridge is rounded by being arcuately tapered towards the mash seam on two opposite sides.

3. Method according to claim 2,
**characterised in that**,
the height of the rounded bottom region of the cartridge is 5% to 10% of the total height.

4. Method according to any of claims 1 to 3,
**characterised in that**,
in step b), the cartridge travels between a vertical circulating belt and a stationary belt while standing upright on a circulating horizontal conveyor belt, one of the two belts having a projecting contour in the lower region, the distance of which projecting contour from the opposite belt is slightly smaller than the outer diameter of the cartridge,
**in that** the cartridge rotates about its vertical axis when it passes between the belts
**and in that** the cartridge is compressed in the lower region such that the mash seam bursts open.

5. Method according to claim 4,
**characterised in that**,
the stationary belt has the projecting contour.

6. Method according to any of claims 1 to 5,
**characterised in that**,
the cartridge is compressed in the lower third of its height.

7. Method according to claim 4,
**characterised in that**,
the circulating belt runs at the same speed as the horizontal conveyor belt.

8. Method according to any of claims 4 to 7,
**characterised in that**,
the vertical circulating belt and the horizontal conveyor belt are made of fabric or rubber.

9. Method according to any of claims 4 to 8,
**characterised in that**,
the stationary vertical belt is made of an aluminium alloy or of steel.

10. Method according to any of claims 4 to 9,
**characterised in that**,
the belts run at such a speed that the cartridge rotates at least once by 360° on the vertical belt.

11. Method according to any of claims 1 to 10,
**characterised in that**,
the cartridge is inserted into an atomiser.

## Revendications

1. Procédé de fabrication d'une cartouche constituée d'un récipient extérieur rigide et d'un sachet intérieur déformable, dans lequel un premier convoyeur à vis sans fin amène un premier plastique thermoplastique pour le récipient extérieur et un second convoyeur à vis sans fin un second plastique thermoplastique pour le sachet intérieur à une extrudeuse qui coextrude une préforme qui est disposée entre les moitiés ouvertes d'un moule de soufflage d'une installation de soufflage, dans lequel le moule de soufflage est fermé lorsque la préforme a la longueur nécessaire à la fabrication de la cartouche, dans lequel une soudure d'écrasement composée du matériau du récipient extérieur, dans laquelle est coincée la soudure de fond soudée du sachet intérieur, est réalisée dans la zone de fond de la cartouche à fabriquer, et dans lequel la préforme est soufflée par un milieu sous pression pour l'application sur la paroi du moule de soufflage et la cartouche est retirée du moule de soufflage,
**caractérisé par** les étapes suivantes :
a) la soudure d'écrasement est coupée jusqu'à une largeur résiduelle de 0,6 à 0,15 mm, de préférence 0,2 mm,
b) la cartouche est comprimée latéralement en la faisant tourner autour de son axe longitudinal jusqu'à ce que la soudure d'écrasement éclate, dans lequel la soudure de fond soudée du sachet intérieur reste adhérente d'un côté de la soudure d'écrasement éclatée, et la zone de fond du sachet intérieur de l'autre côté de la paroi intérieure du récipient extérieur est légèrement prédélaminée,
c) une pression négative est créée dans le sachet intérieur, de sorte que le sachet intérieur s'effondre du côté prédélaminé,
d) ensuite, le sachet intérieur est replacé complètement contre la paroi intérieure du récipient extérieur par surpression.

2. Procédé selon la revendication 1,
**caractérisé en ce**
**que** la cartouche est soufflée de manière à ce que la zone de fond de la cartouche cylindrique soit arrondie en rejoignant la soudure d'écrasement en forme d'arc sur deux côtés opposés.

3. Procédé selon la revendication 2,
**caractérisé en ce**
**que** la hauteur de la zone de fond arrondie de la cartouche atteint 5 % à 10 % de la hauteur totale.

4. Procédé selon l'une quelconque des revendications 1 à 3,
**caractérisé en ce**
**que**, à l'étape b), la cartouche circule à la verticale sur une bande transporteuse horizontale rotative entre une bande rotative verticale et une bande fixe, dans lequel l'une des deux bandes présente dans la zone inférieure un contour saillant dont la distance par rapport à la bande disposée en vis-à-vis est légèrement inférieure au diamètre extérieur de la cartouche,
**que** la cartouche tourne autour de son axe vertical lors du passage entre les bandes
et **que** la cartouche est comprimée dans la zone inférieure de telle sorte que la soudure d'écrasement éclate.

5. Procédé selon la revendication 4,
**caractérisé en ce**
**que** la bande fixe présente le contour saillant.

6. Procédé selon l'une quelconque des revendications 1 à 5,
**caractérisé en ce**
**que** la cartouche est comprimée au tiers inférieur de sa hauteur.

7. Procédé selon la revendication 4,
**caractérisé en ce**
**que** la bande rotative circule à la même vitesse que la bande transporteuse horizontale.

8. Procédé selon l'une quelconque des revendications 4 à 7,
caractérisé en ce
la bande rotative verticale et la bande transporteuse horizontale sont en tissu ou en caoutchouc.

9. Procédé selon l'une quelconque des revendications 4 à 8,
**caractérisé en ce**
**que** la bande verticale fixe est en alliage d'aluminium ou en acier.

10. Procédé selon l'une quelconque des revendications 4 à 9,
**caractérisé en ce**
**que** les bandes passent à une vitesse telle que la cartouche tourne au moins une fois de 360° sur la bande verticale.

11. Procédé selon l'une quelconque des revendications 1 à 10,
**caractérisé en ce**
**que** la cartouche est insérée dans un pulvérisateur.
